# EUROPÄISCHE PATENTSCHRIFT

(11) **EP 3 453 293 B1**
(45) Veröffentlichungstag und Bekanntmachung des Hinweises auf die Patenterteilung: **24.05.2023**
(21) Anmeldenummer: 18187652.5
(22) Anmeldetag: 07.08.2018
(51) Int. Cl.: A47J 31/46, A47J 31/52

(54) **KAFFEEAUTOMAT MIT GESCHMACKSOPTIMIERTER GETRÄNKEAUSGABE**
AUTOMATIC COFFEE MACHINE WITH TASTE-OPTIMIZED BEVERAGE DISPENSING
DISTRIBUTEUR AUTOMATIQUE DE CAFÉ POURVU DE DISTRIBUER DE BOISSONS À GOUT OPTIMISÉ

(30) Priorität: 12.09.2017 DE 102017120995
(43) Veröffentlichungstag der Anmeldung: 13.03.2019
(73) Patentinhaber: Miele & Cie. KG, 33332 Gütersloh (DE)
(72) Erfinder: Schnelle, Axel, 33106 Paderborn (DE); Paletta, Marlene, 33659 Bielefeld (DE)

(56) Entgegenhaltungen:
- DE-A1-102016 104 020
- GB-A- 2 469 873
- US-A- 5 158 793

## Beschreibung

Die Erfindung betrifft einen Kaffeeautomaten mit
einem Strömungsleitungssystem mit einer Wasserzuführung, einer Pumpe, einer Ventileinrichtung zum Steuern der Strömungswege, einem Wassererhitzer und zumindest einer Auslaufdüse;
   - einer Brühkammer, zum Aufbrühen einer in der Brühkammer eingegebenen vorbestimmten Menge an Trockensubstanz;
   - zumindest einem Vorratsbehälter zum Bereithalten einer Sorte Trockensubstanz, wie Kaffeebohnen;
   - einer Steuereinrichtung zum Aktivieren und Deaktivieren der Pumpe, der Ventileinrichtung und des Durchlauferhitzers derart, um ein Aufbrühen der Trockensubstanz und die Herstellung eines Getränks zu bewirken,
wobei die Steuereinrichtung folgendes umfasst:
   - einen Speicher zum Abspeichern von spezifischen Getränkeparametern für ein ausgewähltes oder konfiguriertes Getränks.

Die Bedienung von Haushaltsgeräten, insbesondere Kaffeeautomaten oder dergleichen, erfolgt herkömmlich über Bedienhandlungen am jeweiligen Gerät selbst. Zur erleichterten Bedienung ist es zum Beispiel bei Kaffeeautomaten bekannt, dass das Gerät für einen jeweiligen Benutzer spezifische Daten speichert und diese abrufbar vorhält. Auf diese Weise kann zum Beispiel bei Kaffeeautomaten ein sogenanntes Genießerprofil erstellt werden, in die Mischungsverhältnisse und/oder Zutaten für ein jeweiliges Getränk spezifiziert sind, so dass bei Abruf des Getränks an dem Kaffeeautomaten durch denjenigen Benutzer, der dieses Profil angelegt hatte oder für den dieses Profil angelegt wurde, eine Zubereitung des jeweiligen Getränks nach dessen Wünschen erfolgt. Solche Benutzer- oder Genießerprofile können grundsätzlich über Bedienhandlungen am jeweiligen Haushaltsgerät abgerufen werden. Zum erleichterten Abruf eines solchen Benutzerprofils ist in der DE 10 2006 032 707 A1 bereits vorgeschlagen, dass der Benutzer zum Aufruf eines Benutzerprofils seinen Fingerabdruck verwenden kann. Der Aufruf des Benutzerprofils soll sich damit auf eine einzige Bedienhandlung, nämlich das Auflegen eines Fingers des Benutzers auf einen sogenannten Fingerprintsensor, reduzieren. Hierbei sind jedoch der geschmacklichen Möglichkeiten Grenzen gesetzt, weil der Brühprozess selbst nicht individuell beeinflussbar ist.

Aus der EP 1 700 549 B1 ist ein Kaffeeautomat bekannt, der zwei Bohnenbehälter für verschiedene Bohnensorten umfasst. Mittels einer Bedienhandhabe kann der Benutzer das Mischungsverhältnis und damit die jeweiligen Anteile für das der Brüheinheit zugeführte Kaffeepulver manuell einstellen.

Aus der EP 2 575 561 B1 ist ein Kaffeeautomat bekannt, bei dem das Aufbrühen der Trockensubstanz mit einer ersten Teilmenge Heißwasser erfolgt, und wobei nach dem Aufbrühen die Restmenge Heißwasser direkt und unter Umgehung der Brühkammer der Tasse zugeführt wird. Dadurch wird erreicht, dass die Brühzeit exakt eingehalten wird, auch wenn das fertige Getränk mehr Volumen aufweist. Auch bei dieser Brühmethode werden alle während der Brühzeit extrahierten Geschmackssubstanzen dem Getränk zugeführt. Bei der Verwendung einer Kaffeesorte mit einem hohen Säureanteil werden alle Säureanteile dem Getränk zugeführt, weil die Säure in den ersten Sekunden des Brühprozesses extrahiert werden. Die Bitterstoffe werden in der späteren Phase, also nach 25 bis 30 Sekunden aus der Trockensubstanz gelöst.

Die US 5 158 793 A offenbart einen Getränkebereiter gemäß dem Oberbegriff des Anspruchs 1. In der Leitung, die der Brühkammer nachgeschaltet ist, ist ein Ventil vorhanden, das die Ausgabeleitung, die der Brühkammer nachgeschaltet ist, multiplexartig einer von mehreren Auslässen zuschalten kann. Hierbei gelangt die komplette Menge an aufgebrühter Flüssigkeit zu dem jeweils zugeordneten Getränkeauslass.

Der Erfindung liegt somit die Aufgabe zu Grunde, einen Kaffeeautomaten bereitzustellen, welcher dem Benutzer auf einfache Weise erlaubt, Getränkeeigenschaften, wie sauer, bitter, Körperfülle oder psychotrope Wirkungen, zumindest nahezu exakt einzustellen. Erfindungsgemäß wird unter anderem diese Aufgabe durch einen Kaffeeautomaten mit den Merkmalen des unabhängigen Anspruchs 1 gelöst. Vorteilhafte Ausführungen ergeben sich aus den abhängigen Ansprüchen.

Der Vorteil der Erfindung besteht darin, dass sehr exakt und zuverlässig der gewünschte Getränkegeschmack oder Geschmacksnote erreicht wird. Dabei können die sensorischen Eigenschaften auf einfache und übersichtliche Art und Weise durch den Benutzer mittels der Bedienvorrichtung ausgewählt bzw. am Gerät eingestellt werden. Die Geschmackseigenschaften sind zwar von der Sorte der Trockensubstanz, beispielsweise der Bohnensorte, der Röstung und dem Mahlgrad vorgegeben, jedoch hat der Brühprozess einen weiteren, erheblichen Einfluss auf die Geschmackseigenschaften des fertigen Getränks. Genau hier setzt die Erfindung an, den optimalen Geschmack aus der verwendeten Trockensubstanz zu erreichen bzw. individuelle Anpassungen der Geschmackseigenschaften bereitzustellen. Als weiteren Aspekt gilt es dabei zu beachten, dass unterschiedliche Kaffeesorten unterschiedlichen Koffeingehalt und unterschiedlichen Gehalt an Bitterstoffen aufweisen, sodass die Kaffeesorten im richtigen Verhältnis gemischt werden müssen, damit vor allem auch die gesamte Mahlmenge, also die Menge der Trockensubstanz, und der Geschmack annähernd die vordefinierten Eigenschaften aufweisen.

Hierzu umfasst die Ventileinrichtung ein mittels der Steuereinrichtung gesteuertes Ventil, das dazu eingerichtet ist, die Strömungsleitung für die zubereitete oder aufgebrühte Getränkeflüssigkeit zur Ausgabedüse sequentiell, also in zeitlicher Abfolge nacheinander, zu verbinden und zu unterbrechen. Das bewirkt, dass die Ausgabe des aufgebrühten Getränks in mehreren Fraktionen erfolgt. Als Fraktion wird der Anteil an Getränkemenge bezeichnet, der innerhalb des vorgegebenen Zeitanteils während des Brühvorgangs erzeugt wird. Damit wird das im Brühprozess erzeugte Flüssigkeitsvolumen sozusagen in Teilkomponenten bzw. sogenannten Fraktionen aufgeteilt, wobei einige, ausgewählte Teilkomponenten / Fraktionen zur Getränkedüse gelangen und die nicht ausgewählten einem anderen Behälter zugeführt werden. Der andere Behälter ist dabei zweckmäßigerweise der Abfallbehälter, da die Fraktionen mit unerwünschten Geschmackseigenschaften in der Regel nicht benötigt werden. Alternativ können die verworfenen Fraktionen einer zweiten Ausgabedüse zugeführt werden, um ein weiteres Getränk zuzubereiten. Damit können gleichzeitig zwei Getränke mit unterschiedlichen Geschmackseigenschaften hergestellt werden. Hierbei wird der Effekt ausgenutzt, dass in den ersten Sekunden des Aufbrühens die Geschmackssubstanzen, die den sauren Geschmack verursachen, aus der Trockensubstanz gelöst werden. Danach werden andere Geschmackssubstanzen gelöst. Nach längerem Aufbrühen, beispielsweise nach 15 bis 20 Sekunden, werden die Bitterstoffe aus der Trockensubstanz gelöst. Wenn nur eine geringe Bitterkeit gewünscht ist, wird nur ein Teil der mit Bitterstoffen versehenen Getränkeflüssigkeit der Ausgabedüse zugeführt.

In einer bevorzugten Ausführung ist das gesteuerte Umschaltventil und die entsprechend programmierten Steuereinrichtung dazu eingerichtet, die Strömungsleitung für die zubereitete oder aufgebrühte Getränkeflüssigkeit ferner sequentiell zu einem Abfallbehälter zu verbinden, um die Strömungsleitung zum Abfallbehälter zu sperren, wenn die Strömungsleitung für die zubereitete oder aufgebrühte Getränkeflüssigkeit zur Ausgabedüse verbunden ist, und die Strömungsleitung für die zubereitete oder aufgebrühte Getränkeflüssigkeit zur Ausgabedüse zu sperren, wenn die Strömungsleitung für die zubereitete oder aufgebrühte Getränkeflüssigkeit zum Abfallbehälter verbunden ist. Das Umschaltventil ist somit als Multiplexer ausgebildet, sodass zeitgenau eine Umschaltung der Flüssigkeitsausgabe erfolgen kann, ohne den laufenden Brühprozess zu unterbrechen.

Insgesamt ist es dabei zweckmäßig, dass die Steuereinrichtung dazu eingerichtet ist, während des Aufbrühvorgangs bei aktivierter Pumpe das Umschaltventil für die zubereitete oder aufgebrühte Getränkeflüssigkeit für eine erste vorbestimmte Zeit in einer ersten Schaltposition und nach Ablauf der ersten vorbestimmten Zeit für eine zweite vorbestimmte Zeit in eine zweite Schaltposition zu schalten, um die Strömungsleitung bei aktiviertem Brühvorgang von einem ersten Leitungsweg zu einem zweiten Leitungsweg umzuschalten. Weiterhin ist es zweckmäßig, dass die Steuereinrichtung ferner dazu eingerichtet ist, während des Aufbrühvorgangs bei aktivierter Pumpe nach Ablauf der zweiten vorbestimmten Zeit das Umschaltventil für die zubereitete oder aufgebrühte Getränkeflüssigkeit für eine dritte vorbestimmte Zeit in die erste Schaltposition zu betätigen.

In einer insgesamt zweckmäßigen Ausführung der Erfindung umfasst die Steuereinrichtung als Programmteil oder funktionale Komponente eine Zuordnungseinheit, welche wie folgt eingerichtet ist:
- eine vorgegebene Gesamtzeit für den Brühvorgang festzulegen;
- zumindest einen ersten Zeitanteil und/oder einen dritten Zeitanteil für die Aktivierung des ersten Leitungswegs und
- zumindest einen zweite Zeitanteil für die Aktivierung des zweiten Leitungswegs zu bestimmen;
wobei die Zuordnungseinheit derart eingerichtet oder programmiert ist, dass sich der erste Zeitanteil und der zweite Zeitanteil und/oder der dritte Zeitanteil in Abhängigkeit der vom Benutzer vorgegebenen Getränkeparameter des konfigurierten Getränks ergibt. Als Zeitanteil ist dabei ein Zeitabschnitt innerhalb der Zeit für einen vollständigen Brühvorgang gemeint.

In einer weiteren, insgesamt zweckmäßigen Ausführung sind die Getränkeparameter und/oder die Zeitanteile in einem Initialisierungsmodus einstellbar und im Speicher (MEM) abspeicherbar. Der Benutzer kann somit die Getränkeparameter als Ziel vorgeben, wie das fertige Getränk schmecken und welchen Koffeingehalt es aufweisen soll. Die Einstellung oder Festlegung der Zeitanteile für die Zuführung der einzelnen Fraktionen zur Ausgabedüse erfolgt danach automatisch durch die Steuereinrichtung bzw. der in der Steuereinrichtung implementierten Zuordnungseinheit. Damit wird erreicht, dass der Benutzer auf einfache Weise den Geschmack und/oder den Koffeingehalt bei Beibehaltung des vorgegebenen Geschmacks individuell einstellen kann oder den Koffeingehalt individuell verändern kann unter Beibehaltung einer vorgegebenen Geschmacksrichtung.

In einer insgesamt zweckmäßigen Ausführung sind die Geschmacksparameter in einem Initialisierungsmodus einstellbar und im Speicher abspeicherbar. Das bedeutet, dass der Anwender einem vorbestimmten Getränk die Geschmackseigenschaften und Stärke, also einen Wert der die Eigenschaft "Kräftig" bis "Mild" oder "sauer" bis "bitter" repräsentiert, und/oder den die gewünschte Getränkemenge eingeben kann. Diese gespeicherten Eigenschaften werden dann zur Zubereitung des Getränks zu Grunde gelegt. Bevorzugt sind die spezifischen Bohnenparameter, Säure, Bitterkeit und Körperfülle und Mahlgrad als Kennzahl im Speicher abgelegt.

In einer weiteren, insgesamt zweckmäßigen Ausführung sind die Getränkeparameter in einem Konfigurationsmodus vor einem Getränkebezug festlegbar. Das bedeutet, dass der dem Benutzer auf einem Bedienfeld der Bedienvorrichtung des Kaffeeautomaten ein Getränk mit vordefinierten Geschmackseigenschaften angeboten werden. Weiterhin ist als Weiterbildung die Möglichkeit bereitgestellt, die Getränkeeigenschaften und damit die Getränkeparameter zu verändern und die veränderten Parameter abzuspeichern, mit denen mittels der Zuordnungseinheit die Auswahl der einzelnen Getränkefraktionen zum nachfolgenden Zubereiten des Getränks erfolgt.

Die Getränkeparameter beinhalten unter anderem ein Maß für Gesamtmenge, Stärke, Bitter, Sauer und/oder Körperfülle des fertigen Getränks. Das bedeutet, dass der Anwender seine Wünsche plakativ der Steuereinrichtung mitteilen kann, beispielsweise 50 % bitterer Geschmack, wobei das Mischen und das Einstellen des jeweils für diesen Getränkewunsch optimalen Mahlgrades die Steuereinrichtung bzw. die Zuordnungseinheit der Steuereinrichtung übernimmt. Damit wird der Bedienkomfort stark verbessert, weil der Benutzer die sensorischen Eigenschaften definiert, ohne dass er genaue Kenntnisse über die Eigenschaften der bevorrateten Bohnensorten haben muss.

In einer weiteren, insgesamt zweckmäßigen Ausführung umfasst der Speicher eine Liste, welche die Zeiten zur Aktivierung der Strömungswege bezeichnet, wobei die durch die Zuordnungseinheit vorgenommene Auswahl der Zeiten für die Aktivierung der einzelnen Strömungsleitungen aus der Liste mit Hilfe einer Zuordnungstabelle, eines mathematischen Modells oder einer mathematischen Funktion erfolgt, damit die Steuereinrichtung mittels der bereitgestellten Auswahl das Umschaltventil entsprechend zur nachfolgenden Getränkezubereitung steuern kann. Die, die Zuordnungstabelle und/oder das mathematische Modell können zweckmäßigerweise auch Bestandteil der Zuordnungseinheit sein. Das mathematische Modell ist zweckmäßigerweise eine Formel oder eine Beschreibung für eine Rechenoperation, um anhand der Eingangsgrößen Getränkeparameter und Bohnenparameter die Zeitanteile bzw. Fraktionen zu berechnen. Dies ist bevorzugt als Computerprogramm im Speicher der Steuereinrichtung hinterlegt, wobei die Steuereinrichtung zur Ausführung des Computerprogramms einen Mikrocontroller enthält.

Ein Ausführungsbeispiel der Erfindung ist in den Zeichnungen rein schematisch dargestellt und wird nachfolgend näher beschrieben. Es zeigen
- Fig. 1:: einen Kaffeeautomaten in einer teilweisen transparenten Darstellung;
- Fig. 2:: Ansicht eines Menues der Bedienvorrichtung;
- Fig. 3, 4:: einen zeitlichen Ablauf einer Zubereitung für verschiedene Zubereitungen.

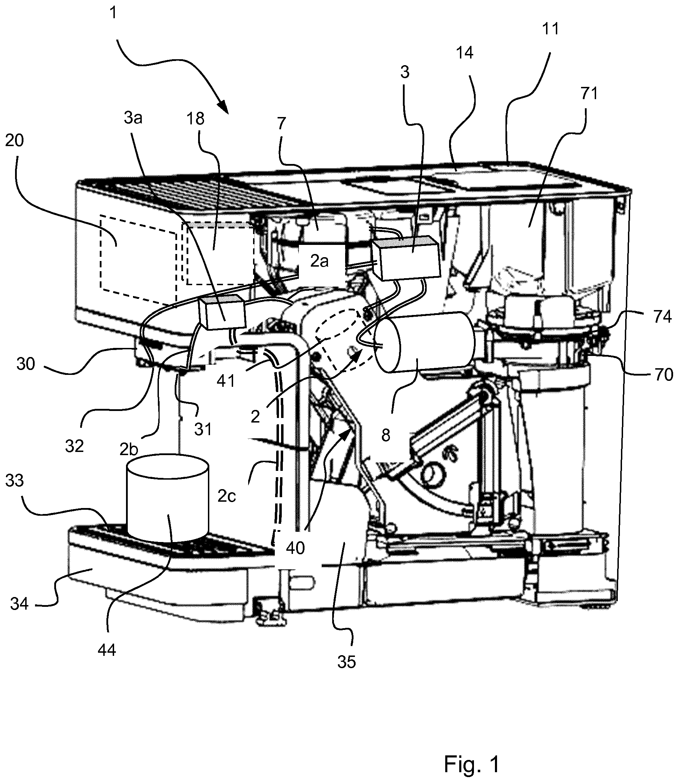

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem eine zumindest ein Vorratsbehältern 71, für Kaffeebohnen mit darunter angebrachtem, motorbetriebenen Mahlwerk 70, den Wasserbehälter 14 sowie das Strömungsleitungssystem 2 untergebracht ist. Im Frontbereich des Heißgetränkebereiters 1 verfügt dieser über einen höhenbeweglichen Auslass 30, in dem mehrere Entnahmeeinrichtungen, hier Auslassdüsen 31, 32 untergebracht sind. Bei der Entnahmeeinrichtung 32 handelt es sich im vorliegenden Fall um eine Dampfdüse 32 zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 31 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung 2a, 2b und durch die Ausgabedüse 31 das fertige Kaffeegetränk ausgegeben wird. Bei dieser Ausführung sind die Ausgabedüsen 31, 32 in der Höhe verschiebbar angeordnet, so dass sie der Höhe eines auf dem Abtropfblech 33 abgestellten Trinkgefäßes 44 angepasst werden kann, ohne dass bei der Abgabe des Getränkes ein Verspritzen erfolgt. Das Abtropfblech 33 ist vorzugsweise mit Öffnungen und/oder Schlitzen versehen, um Flüssigkeitsreste in einer unterhalb des Abtropfbleches 33 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Aktoren bzw. Funktionsbaugruppen, wie Pumpen 8, Ventile der Ventilanordnung 3 und Heizeinrichtung 7 und Mahlwerk 70 zu steuern, wie es für die Zubereitung des jeweils ausgewählten Getränkes notwendig ist. Die Steuereinrichtung 18 umfasst einen Mikrocontroller uC mit einem zugeordneten Speicher MEM.

Die unterhalb des Bohnenbehälters 71 angeordnete Zuführungseinheit 74 dient zum Öffnen und Schließen des Behälters 71, sodass die darin befindlichen Bohnen in der vorbestimmten Menge unter Wirkung der Schwerkraft in das Mahlwerk 70 gelangen. Insgesamt beziehen sich alle Richtungs- und Positionsangaben auf die betriebsgemäße Aufstellposition des Kaffeeautomaten 1. In einer einfacheren Ausführung des Gerätes 1 kann die Zuführeinheit 74 weggelassen werden, sodass das Mahlwerk 70 stets mit Bohnen befüllt ist. Bei der Verwendung von mehreren Bohnenbehältern ist die Zuführeinheit 74 notwendig, damit die verschiedenen Vorratsbehälter 71 einzeln ausgewählt werden können.

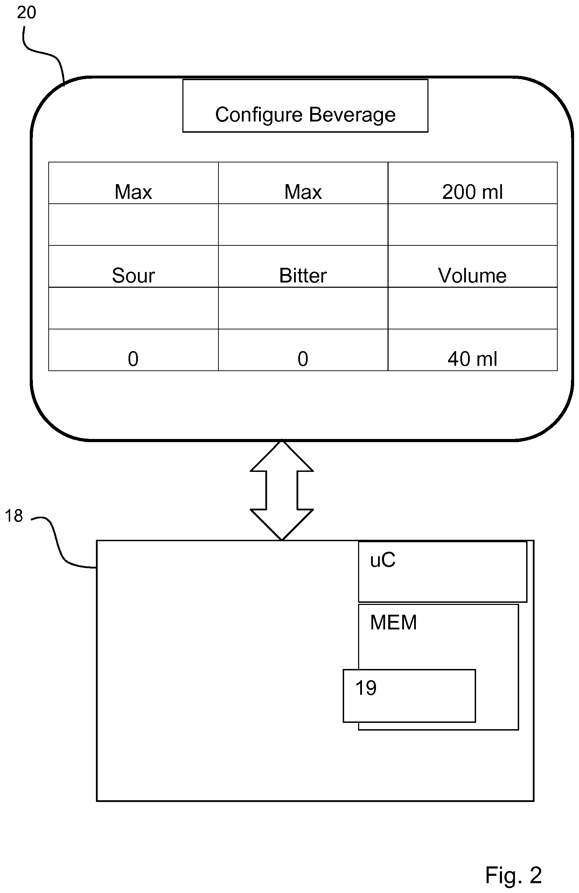

Die in dem Mahlwerk 70 zu einem Pulver verarbeiteten Kaffeebohnen gelangen im Anschluss daran in die Brühkammer 41 der Brüheinheit 40. In Fig. 2 ist ferner schematisch die Steuereinrichtung 18 gezeigt, die einen Mikrocontroller uC umfasst. Ferner ist dem Mikrocontroller uC ein Speicher MEM und die Zuordnungseinheit 19 zugeordnet oder integriert. Der Speicher MEM beinhaltet Programmcode, welcher zum Durchführen der Abläufe zum Zubereiten eines Getränks durch den Mikrocontroller uC ausgebildet ist. Hierzu werden die Aktoren, wie Pumpe 8, Heizung 7, Ventilanordnung 3, und das Mahlwerk 70 mit Hilfe des Mikrocontrollers uC entsprechend aktiviert und deaktiviert. Die Verbindung ist zu den Aktoren mit der Signalverbindung 21 skizziert.

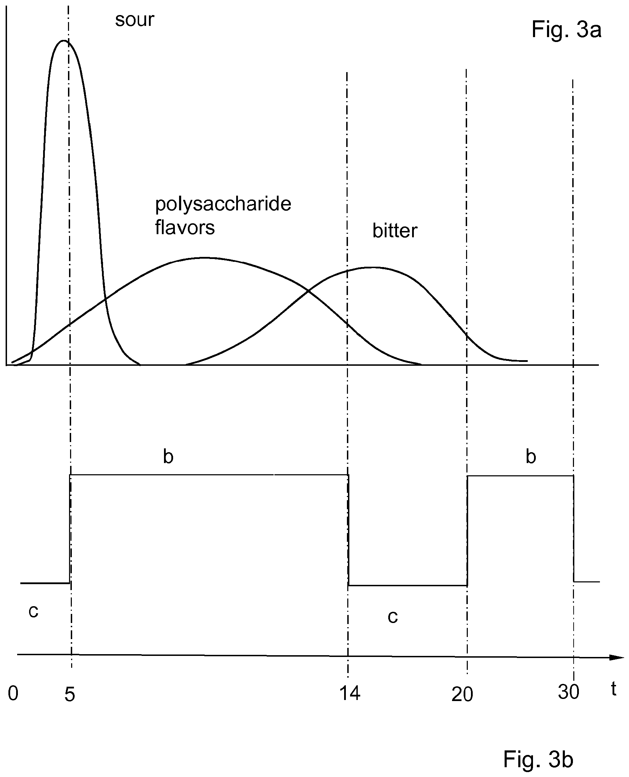

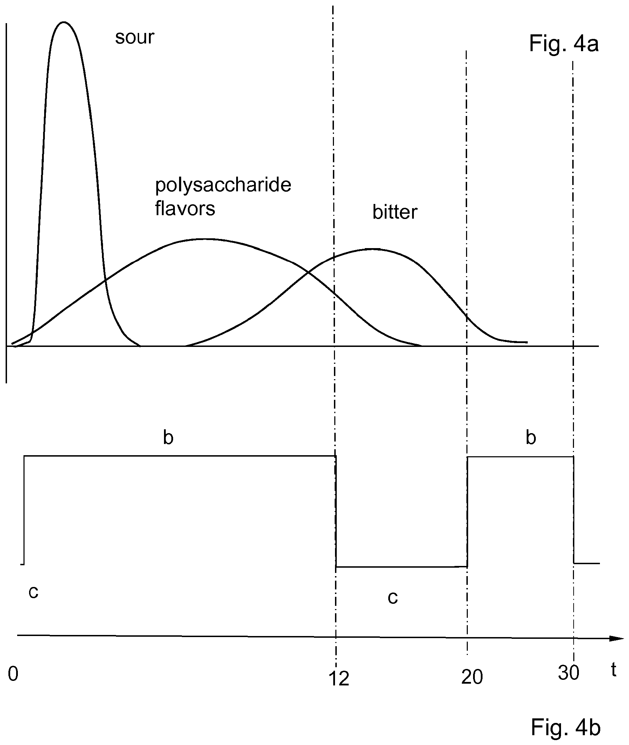

Fig. 2 zeigt schematisch eine Darstellung der Bedienvorrichtung 20 zum Konfigurieren eines Getränks. Die Bedienvorrichtung 20 ist in dem gezeigten Beispiel als Berührbildschirm ausgeführt. Bei der Aktivierung der Funktion "Configure Beverage" werden die verschiedenen sensorischen Eigenschaften und der Koffeingehalt zur Auswahl bzw. zur Veränderung angeboten. In dem Beispiel kann der Geschmacksanteil Sauer "Sour", Bitter "bitter" und die Gesamtmenge "Volume" in Stufen durch Berührung auf eine der angebotenen Berührflächen ausgewählt werden. Nach erfolgter Auswahl werden die Zeitanteile, die für die der Düse 31 zuzuführenden Fraktionen, festgelegt. Das Umschaltventil 3a wird dann nach Aktivierung des Brühprozesses, entsprechend zur Getränkeausgabe gesteuert, wie es beispielhaft in dem Zuordnungsablauf gemäß Fig. 3a und 3b sowie 4a und 4b skizziert ist.

In Fig. 3a ist das Verhalten der Aromenentfaltung für eine gemahlene Kaffeeportion im zeitlichen Ablauf für eine erste vorbestimmte Geschmackseinstellung skizziert. Dies ist hier beispielhaft für die Kaffeesorte Arabica gezeigt, welche einen recht hohen Anteil an Säure bzw. sauer ausbildenden Geschmackskomponenten beinhaltet. Zum Zeitpunkt t=0 beginnt der Aufbrühprozess, also ab t=0 wird heißes Wasser der mit Kaffeepulver befüllten Brühkammer 41 zugeführt. Die Getränkeflüssigkeit wird dann aus der Brühkammer 41 gelangt mittels der Leitung 2a zum Umschaltventil 3a, welches entweder den Weg 2b zur Düse 31 oder den Weg 2c freigibt. In dem dargestellten Zubereitungsprozess wird bis zum Zeitpunkt t=5 der Weg 2a zur Düse 31 gesperrt und der Weg 2b durchgeschaltet, sodass die in diesem Zeitraum aufgebrühte Getränkeflüssigkeit verworfen oder in den Abfallbehälter 34, 41 abgeleitet wird und nicht in das Getränkebehältnis 44 gelangt. Das bedeutet, dass Getränkeflüssigkeit mit hohem Säureanteil nicht verwendet wird. Ab dem Zeitpunkt t=5 wird das Umschaltventil 3a umgeschaltet, sodass der Weg oder die Leitung 2b zur Düse 31 durchgeschaltet oder verbunden ist. Gemäß Fig. 3a ist zu erkennen, dass ab in diesem zeitlichen Abschnitt die Lösung der sauren Geschmackskomponenten "sour" abnimmt und die polsachariden Aromen gelöst werden, die wesentlich zum harmonischen Geschmacksergebnis beitragen. Die Lösung der Bitterstoffe "bitter" beginnt allmählich in dem Zeitraum, in dem auch die Lösung der polsachariden Aromen stattfindet. Ab dem Zeitpunkt t=14 wird das Umschaltventil 3a wieder zum Weg 2c umgeschaltet, um die aufgebrühte Getränkeflüssigkeit wieder zu verwerfen. In dieser Zeit wird ein hoher Anteil an bitteren Geschmacksstoffen "bitter" gelöst, die für das hier zuzubereitende Getränk unerwünscht sind. Ab dem Zeitpunkt t=20 wird das Umschaltventil 3a wieder zum Weg 2b zurückgeschaltet (Fig. 3b), um die gewünschte Restmenge an Getränkeflüssigkeit der Düse 31 bzw. dem Behältnis 44 zuzuführen. Gemäß Fig. 3a ist zu erkennen, dass ab dem Zeitpunkt t=20 die Auflösung der Bitterstoffe "bitter" fast beendet ist, sodass nur ein sehr geringer Anteil an bitteren Geschmackskomponenten zur Düse 31 und zum Behältnis 44 gelangen. Bis zum Zeitpunkt t=30 wird Flüssigkeit der Düse 31 zugeführt, um die gewünschte Gesamtmenge für das fertige Getränk im Behälter 44 zu erhalten. Zum Zeitpunkt t=30 ist der Brühvorgang bzw. Zubereitungsvorgang beendet.

In einer alternativen Ausführung wird ab dem Zeitpunkt t=14 das Umschaltventil 3a wie oben beschrieben geschaltet, damit die Zufuhr von bitteren Aromen "bitter" zu unterbinden. Ferner wird heißes Wasser dem Getränkebehälter 44 zugeführt, bis die vorbestimmte Gesamtmenge erreicht ist.

In Fig. 3a, 3b, 4a, 4b sind die Zeiten t einheitenlos dargestellt, jedoch kann als Einheit Sekunden verwendet werden, sodass der dargestellte Zubereitungsvorgang insgesamt ca. 30 Sekunden dauert.

In Fig. 4a ist das Verhalten der Aromenentfaltung für eine gemahlene Kaffeeportion im zeitlichen Ablauf für eine erste vorbestimmte Geschmackseinstellung skizziert. Dies ist hier beispielhaft für die Kaffeesorte Arabica gezeigt, welche einen recht hohen Anteil an Säure bzw. sauer ausbildenden Geschmackskomponenten beinhaltet. Zum Zeitpunkt t=0 beginnt der Brühprozess, also ab t=0 wird heißes Wasser der mit Kaffeepulver befüllten Brühkammer 41 zugeführt. Die Getränkeflüssigkeit wird dann aus der Brühkammer 41 gelangt mittels der Leitung 2a zum Umschaltventil 3a, welches entweder den Weg 2b zur Düse 31 oder den Weg 2c freigibt. In dem dargestellten Zubereitungsprozess wird von Beginn des Brühprozesses zum Zeitpunkt t=0 bis zum Zeitpunkt t=12 der Weg 2a zur Düse 31 freigegeben, sodass die Getränkeflüssigkeit zur Düse 31 und somit durch die Düse 31 in die Tasse 44 gelangt. Das bedeutet, dass Getränkeflüssigkeit mit hohem Säureanteil für das zuzubereitende Getränk verwendet wird. Zu erkennen ist ferner, dass in diesem zeitlichen Abschnitt neben der Auflösung der sauren Geschmacksanteile auch die polsachariden Aromen gelöst werden, die wesentlich zum harmonischen Geschmacksergebnis beitragen. Die Lösung der Bitterstoffe beginnt allmählich in dem Zeitraum, in dem auch die Lösung der polsachariden Aromen stattfindet. Ab dem Zeitpunkt t=12 wird das Umschaltventil 3a zum Weg 2c umgeschaltet, um die aufgebrühte Getränkeflüssigkeit wieder zu verwerfen. In dieser Zeit wird ein hoher Anteil an bitteren Geschmacksstoffen gelöst, die für das hier zuzubereitende Getränk unerwünscht sind. Ab dem Zeitpunkt t=20 wird das Umschaltventil 3a wieder zum Weg 2b zurückgeschaltet (Fig. 3b), um die gewünschte Restmenge an Getränkeflüssigkeit der Düse 31 bzw. dem Behältnis 44 zuzuführen. Gemäß Fig. 3a ist zu erkennen, dass ab dem Zeitpunkt t=20 die Auflösung der Bitterstoffe "bitter" fast beendet ist, sodass nur ein sehr geringer Anteil an bitteren Geschmackskomponenten zur Düse 31 und zum fertigen Getränk gelangen. Bis zum Zeitpunkt t=30 wird Flüssigkeit der Düse 31 zugeführt, um die gewünschte Gesamtmenge für das fertige Getränk im Behälter 44 zu erhalten. Zum Zeitpunkt t=30 ist der Brühvorgang bzw.

Zubereitungsvorgang beendet. Der aufgebrühte Kaffee beinhaltet nach der hier gezeigten und beschriebenen Zubereitung die volle Säure und eine Reduktion der Bitterstoffe.

In einer alternativen Ausführung wird ab dem Zeitpunkt t=14 das Umschaltventil 3a wie oben beschrieben geschaltet, damit die Zufuhr von bitteren Aromen zu unterbinden. Ferner wird heißes Wasser dem Getränkebehälter 44 zugeführt, bis die vorbestimmte Gesamtmenge erreicht ist. Durch die Zugabe von Heißwasser wird ein milder Geschmack erreicht.

Die Zeiten für die Zugabe der jeweiligen Anteile lassen sich stufig oder stufenlos variieren. Auch das Sperren einer einzigen Fraktion ist möglich, damit der Benutzer seine bevorzugte Geschmacksnote erhält. Da die Zeiten unmittelbar die Flüssigkeitsmenge beeinflussen, können die Kennlinien auch in Abhängigkeit der durch die Brühkammer 41 gepumpte Flüssigkeitsmenge angesehen werden. Anzumerken ist ferner, dass die zu verwerfende Flüssigkeitsmenge mit dem jeweils unerwünschten Geschmacksanteil recht klein ist, bezogen auf die Gesamtmenge eines Getränkebezugs. So werden im erstgenannten Beispiel (Fig. 3b) nur ca. 20 ml Getränkeflüssigkeit verworfen, bei einer Gesamtmenge von mehr als 100 ml.

Im zweiten Beispiel gemäß Fig. 4b werden ca. 30 ml Getränkeflüssigkeit verworfen, was bezogen auf die Gesamtmenge ebenfalls nur einen geringen Anteil ausmacht.

Ein weiterer Nutzen des Umschaltventils 3a ist die Verwendung zur Ableitung von aufgebrauchter Reinigungslösung oder Entkalkungslösung während und nach einem Wartungsvorgang. Hierbei wird die mit Schmutz versehene Reinigungslösung oder Entkalkungslösung direkt durch die Leitung 2c in den Abfallbehälter 34, 35 geleitet, sodass die Ausgabedüse 31 nicht mit Schmutzwasser verunreinigt wird. Die Ausgabedüse 31 kann dann in einem automatischen Reinigungszyklus unabhängig von der Reinigung der Brüheinheit 40 erfolgen.

## Patentansprüche

1. Kaffeeautomat mit
einem Strömungsleitungssystem (2) mit einer Wasserzuführung (14), einer Pumpe (8), einer Ventileinrichtung (3) zum Steuern der Strömungswege, einem Durchlauferhitzer (7) und zumindest einer Auslaufdüse (21, 22);
- einer Brühkammer (41), zum Aufbrühen einer in der Brühkammer eingegebenen vorbestimmten Menge an Trockensubstanz;
- zumindest einem Vorratsbehälter (71) zum Bereithalten einer Sorte Trockensubstanz, wie Kaffeebohnen;
- einer Steuereinrichtung (18, uC) zum Aktivieren und Deaktivieren der Pumpe (8), der Ventileinrichtung (3) und des Durchlauferhitzers (7) derart, um ein Aufbrühen der Trockensubstanz und die Herstellung eines Getränks zu bewirken,
wobei die Steuereinrichtung (18, uC) folgendes umfasst:
- einen Speicher (MEM) zum Abspeichern von spezifischen Getränkeparametern für ein ausgewähltes oder konfiguriertes Getränk;
**dadurch gekennzeichnet.**
**dass** die Ventileinrichtung (3) ein mittels der Steuereinrichtung (18, uC) gesteuertes Ventil (3a) umfasst, das dazu eingerichtet ist, die Strömungsleitung (2a) für die zubereitete oder aufgebrühte Getränkeflüssigkeit zur Ausgabedüse (31) sequentiell zu verbinden, wobei die Steuereinrichtung (18, uC) dazu eingerichtet ist, das Ventil (3a) derart zu steuern, dass die Ausgabe des aufgebrühten Getränks in mehreren Fraktionen während des Brühvorgangs erfolgt, wobei einige ausgewählte Fraktionen des im Brühprozess erzeugten Flüssigkeitsvolumens zur Getränkedüse gelangen und die nicht ausgewählten Fraktionen einem anderen Behälter zugeführt werden.

2. Kaffeeautomat nach Anspruch 1,
**dadurch gekennzeichnet,**
**dass** das Umschaltventil (3a) dazu eingerichtet ist, die Strömungsleitung (2a) für die zubereitete oder aufgebrühte Getränkeflüssigkeit ferner sequentiell zu einem Abfallbehälter (34, 35) zu verbinden, um die Strömungsleitung (2a) zum Abfallbehälter (34, 35) zu sperren, wenn die Strömungsleitung (2a) für die zubereitete oder aufgebrühte Getränkeflüssigkeit zur Ausgabedüse (31) verbunden ist, und die Strömungsleitung (2a) für die zubereitete oder aufgebrühte Getränkeflüssigkeit zur Ausgabedüse (31) zu sperren, wenn die Strömungsleitung (2a) für die zubereitete oder aufgebrühte Getränkeflüssigkeit zum Abfallbehälter (34, 35) verbunden ist.

3. Kaffeeautomat nach Anspruch 1 oder 2,
**dadurch gekennzeichnet,**
**dass** die Steuereinrichtung (18, uC) dazu eingerichtet ist, während des Aufbrühvorgangs bei aktivierter Pumpe (8) das Umschaltventil (3a) für die zubereitete oder aufgebrühte Getränkeflüssigkeit für eine erste vorbestimmte Zeit in einer ersten Schaltposition (b) und nach Ablauf der ersten vorbestimmten Zeit für eine zweite vorbestimmte Zeit in eine zweite Schaltposition (c) zu schalten, um die Strömungsleitung (2a) bei aktiviertem Brühvorgang von einem ersten Leitungsweg (2c, 2b) zu einem zweiten Leitungsweg (2b, 2c) umzuschalten.

4. Kaffeeautomat nach Anspruch 3,
**dadurch gekennzeichnet,**
**dass** die Steuereinrichtung (18, uC) ferner dazu eingerichtet ist, während des Aufbrühvorgangs bei aktivierter Pumpe (8) nach Ablauf der zweiten vorbestimmten Zeit das Umschaltventil (3a) für die zubereitete oder aufgebrühte Getränkeflüssigkeit für eine dritte vorbestimmte Zeit in die erste Schaltposition (b) zu betätigen.

5. Kaffeeautomat nach Anspruch 3 oder 4,
**dadurch gekennzeichnet,**
**dass** die Steuereinrichtung (18, uC) eine Zuordnungseinheit (19) umfasst, welche wie folgt eingerichtet ist:
- eine vorgegebene Gesamtzeit für den Brühvorgang festzulegen;
- zumindest einen ersten Zeitanteil und/oder einen dritten Zeitanteil für die Aktivierung des ersten Leitungswegs (2b) und
- zumindest einen zweite Zeitanteil für die Aktivierung des zweiten Leitungswegs (2c) zu bestimmen;
wobei die Zuordnungseinheit (19) derart eingerichtet oder programmiert ist, dass sich der erste Zeitanteil und der zweite Zeitanteil und/oder der dritte Zeitanteil in Abhängigkeit der vom Benutzer vorgegebenen Getränkeparameter des konfigurierten Getränks ergibt.

6. Kaffeeautomat nach einem der Ansprüche 1 bis 5,
**dadurch gekennzeichnet,**
**dass** die Getränkeparameter und/oder die Zeitanteile in einem Initialisierungsmodus einstellbar und im Speicher (MEM) abspeicherbar sind.

7. Kaffeeautomat nach einem der Ansprüche 1 bis 6,
**dadurch gekennzeichnet,**
**dass** die spezifischen Getränkeparameter wie Säure, Bitterkeit und Körperfülle als Kennzahl im Speicher (MEM) abgelegt sind.

8. Kaffeeautomat nach einem der Ansprüche 1 bis 7, umfassend eine Bedien- und Ausgabeeinrichtung,
**dadurch gekennzeichnet,**
**dass** die Getränkeparameter mittels der Bedienvorrichtung (20) in einem Konfigurationsmodus vor einem Getränkebezug festlegbar sind.

9. Kaffeeautomat nach Anspruch 7 oder 8,
**dadurch gekennzeichnet,**
**dass** die Getränkeparameter wahlweise im Speicher (MEM) abgespeichert werden können, und mittels einer festgelegten Auswahlkennung für einen Getränkebezug aktivierbar sind.

10. Kaffeeautomat nach einem der Ansprüche 1 bis 9,
**dadurch gekennzeichnet,**
**dass** zumindest ein Getränkeparameter ein Maß für Gesamtmenge, den Koffeingehalt, die Stärke, die Bitterkeit, das Geschmacksempfinden Sauer und/oder die Körperfülle des fertigen Getränks beinhaltet.

11. Kaffeeautomat nach einem der Ansprüche 1 bis 10,
**dadurch gekennzeichnet,**
**dass** der Speicher (MEM) eine Liste umfasst, welche die Zeiten zur Aktivierung der Strömungswege (2b, 2c) bezeichnet, wobei die durch die Zuordnungseinheit (19) vorgenommene Auswahl der Zeiten für die Aktivierung der einzelnen Strömungsleitungen (2b, 2c) aus der Liste mit Hilfe einer Zuordnungstabelle, eines mathematischen Modells oder einer mathematischen Funktion erfolgt, damit die Steuereinrichtung (18, uC) mittels der bereitgestellten Auswahl das Umschaltventil (3a) entsprechend zur nachfolgenden Getränkezubereitung steuern kann.

## Claims

1. Coffee machine comprising
a flow line system (2) having a water supply (14), a pump (8), a valve device (3) for controlling the flow paths, a continuous-flow heater (7) and at least one outlet nozzle (21, 22);
- a brewing chamber (41) for brewing a predetermined quantity of dry substance fed into the brewing chamber;
- at least one storage container (71) for holding a type of dry substance, such as coffee beans;
- a control device (18, uC) for activating and deactivating the pump (8), the valve device (3) and the continuous-flow heater (7) so as to effect the brewing of the dry substance and the production of a beverage,
the control device (18, uC) comprising:
- a memory (MEM) for storing specific beverage parameters for a selected or configured beverage;
**characterised in that**
the valve device (3) comprises a valve (3a) which is controlled by means of the control device (18, uC) and is designed to sequentially connect the flow line (2a) for the prepared or brewed beverage liquid to the dispensing nozzle (31), the control device (18, uC) being designed to control the valve (3a) such that the brewed beverage is dispensed in multiple fractions during the brewing process, with some selected fractions of the liquid volume produced in the brewing process reaching the beverage nozzle and the unselected fractions being fed to another container.

2. Coffee machine according to claim 1,
**characterised in that**
the switching valve (3a) is designed to further sequentially connect the flow line (2a) for the prepared or brewed beverage liquid to a waste container (34, 35) in order to lock the flow line (2a) to the waste container (34, 35) when the flow line (2a) for the prepared or brewed beverage liquid is connected to the dispensing nozzle (31), and to lock the flow line (2a) for the prepared or brewed beverage liquid to the dispensing nozzle (31) when the flow line (2a) for the prepared or brewed beverage liquid is connected to the waste container (34, 35).

3. Coffee machine according to either claim 1 or claim 2,
**characterised in that**
the control device (18, uC) is designed, during the brewing process and when the pump (8) is activated, to switch the switching valve (3a) for the prepared or brewed beverage liquid to a first switching position (b) for a first predetermined time and to a second switching position (c) for a second predetermined time after the first predetermined time has elapsed, in order to switch the flow line (2a) from a first line path (2c, 2b) to a second line path (2b, 2c) when the brewing process is activated.

4. Coffee machine according to claim 3,
**characterised in that**
the control device (18, uC) is further designed, during the brewing process and when the pump (8) is activated, to actuate the switching valve (3a) for the prepared or brewed beverage liquid to the first switching position (b) for a third predetermined time after the second predetermined time has elapsed.

5. Coffee machine according to either claim 3 or claim 4,
**characterised in that**
the control device (18, uC) comprises an assignment unit (19), which is configured as follows:
- to determine a predetermined total time for the brewing process;
- to establish at least a first time portion and/or a third time portion for the activation of the first line path (2b) and
- to establish at least a second time portion for the activation of the second line path (2c);
the assignment unit (19) being configured or programmed such that the first time portion and the second time portion and/or the third time portion result as a function of the beverage parameters of the configured beverage that are predetermined by the user.

6. Coffee machine according to any of claims 1 to 5,
**characterised in that**
the beverage parameters and/or the time portions can be set in an initialisation mode and stored in the memory (MEM).

7. Coffee machine according to any of claims 1 to 6,
**characterised in that**
the specific beverage parameters such as acidity, bitterness and body fullness are stored as a characteristic value in the memory (MEM).

8. Coffee machine according to any of claims 1 to 7, comprising an operating and output device,
**characterised in that**
the beverage parameters can be determined by means of the operating device (20) in a configuration mode before a beverage is purchased.

9. Coffee machine according to either claim 7 or claim 8,
**characterised in that**
the beverage parameters can optionally be stored in the memory (MEM) and can be activated by means of a determined selection identifier for a beverage purchase.

10. Coffee machine according to any of claims 1 to 9,
**characterised in that**
at least one beverage parameter includes a measure of the total amount, the caffeine content, the strength, the bitterness, the sour taste sensation and/or the body fullness of the final beverage.

11. Coffee machine according to any of claims 1 to 10,
**characterised in that**
the memory (MEM) comprises a list which designates the times for activating the flow paths (2b, 2c), the selection via the assignment unit (19) of the times for the activation of the individual flow lines (2b, 2c) from the list being carried out with the aid of an assignment table, a mathematical model or a mathematical function, so that the control device (18, uC) can control, by means of the provided selection, the switching valve (3a) in accordance with the subsequent beverage preparation.

## Revendications

1. Machine à café automatique comportant
un système de conduite d'écoulement (2) comportant une alimentation en eau (14), une pompe (8), un dispositif de soupape (3) destiné à commander les voies d'écoulement, un chauffe-eau instantané (7) et au moins une buse de sortie (21, 22) ;
- une chambre d'infusion (41) destinée à infuser une quantité prédéterminée de substance sèche introduite dans la chambre d'infusion ;
- au moins un récipient de stockage (71) destiné à fournir un type de substance sèche, tel que des grains de café ;
- un dispositif de commande (18, uC) destiné à activer et désactiver la pompe (8), le dispositif de soupape (3) et le chauffe-eau instantané (7) de manière à provoquer une infusion de la substance sèche et la production d'une boisson,
dans laquelle le dispositif de commande (18, uC) comprend les éléments suivants :
- une mémoire (MEM) destinée à mémoriser des paramètres de boisson spécifiques pour une boisson sélectionnée ou configurée ;
**caractérisée en ce que**
le dispositif de soupape (3) comprend une soupape (3a) commandée au moyen du dispositif de commande (18, uC), laquelle soupape est conçue pour relier de manière séquentielle la conduite d'écoulement (2a) pour le liquide de boisson préparé ou infusé à la buse de distribution (31), le dispositif de commande (18, uC) étant configuré pour commander la soupape (3a) de manière telle que la distribution de la boisson infusée s'effectue en plusieurs fractions pendant le processus d'infusion, quelques fractions sélectionnées du volume de liquide produit dans le processus d'infusion arrivant à la buse pour boisson et les fractions non sélectionnées étant acheminées vers un autre récipient.

2. Machine à café automatique selon la revendication 1,
**caractérisée en ce que**
la soupape de commutation (3a) est conçue pour relier en outre de manière séquentielle la conduite d'écoulement (2a) pour le liquide de boisson préparé ou infusé à un récipient à déchets (34, 35) afin de bloquer la conduite d'écoulement (2a) vers le récipient à déchets (34, 35) lorsque la conduite d'écoulement (2a) pour le liquide de boisson préparé ou infusé est reliée à la buse de distribution (31) et de bloquer la conduite d'écoulement (2a) pour le liquide de boisson préparé ou infusé vers la buse de distribution (31) lorsque la conduite d'écoulement (2a) pour le liquide de boisson préparé ou infusé est reliée au récipient à déchets (34, 35).

3. Machine à café automatique selon la revendication 1 ou 2,
**caractérisée en ce que**
le dispositif de commande (18, uC) est configuré pour commuter, pendant le processus d'infusion et lorsque la pompe (8) est activée, la soupape de commutation (3a) pour le liquide de boisson préparé ou infusé, pendant un premier temps prédéterminé, dans une première position de commutation (b) et, après l'expiration du premier temps prédéterminé, pendant un deuxième temps prédéterminé, dans une seconde position de commutation (c) afin de commuter la conduite d'écoulement (2a), pendant que le processus d'infusion est activé, d'une première voie de conduite (2c, 2b) vers une seconde voie de conduite (2b, 2c).

4. Machine à café automatique selon la revendication 3,
**caractérisée en ce que**
le dispositif de commande (18, uC) est en outre configuré pour actionner, pendant le processus d'infusion et lorsque la pompe (8) est activée, après l'expiration du deuxième temps prédéterminé, la soupape de commutation (3a) pour le liquide de boisson préparé ou infusé, pendant un troisième temps prédéterminé, dans la première position de commutation (b).

5. Machine à café automatique selon la revendication 3 ou 4,
**caractérisée en ce que**
le dispositif de commande (18, uC) comprend une unité d'attribution (19), laquelle est configurée pour :
- définir un temps total spécifié pour le processus d'infusion ;
- déterminer au moins une première proportion de temps et/ou une troisième proportion de temps pour l'activation de la première voie de conduite (2b) et
- déterminer au moins une deuxième proportion de temps pour l'activation de la seconde voie de conduite (2c) ;
l'unité d'attribution (19) étant configurée ou programmée de manière telle que la première proportion de temps et la deuxième proportion de temps et/ou la troisième proportion de temps sont obtenues en fonction des paramètres de boisson de la boisson configurée spécifiés par l'utilisateur.

6. Machine à café automatique selon l'une des revendications 1 à 5,
**caractérisée en ce que**
les paramètres de boisson et/ou les proportions de temps peuvent être réglés dans un mode d'initialisation et mémorisés dans la mémoire (MEM).

7. Machine à café automatique selon l'une des revendications 1 à 6,
**caractérisée en ce que**
les paramètres de boisson spécifiques, tels que l'acidité, l'amertume et la plénitude, sont enregistrés en tant qu'indicateur dans la mémoire (MEM).

8. Machine à café automatique selon l'une des revendications 1 à 7, comprenant un dispositif de service et un dispositif de distribution,
**caractérisée en ce que**
les paramètres de boisson peuvent être définis au moyen de l'appareil de service (20) dans un mode de configuration avant un achat de boisson.

9. Machine à café automatique selon la revendication 7 ou 8,
**caractérisée en ce que**
les paramètres de boisson peuvent être mémorisés sélectivement dans la mémoire (MEM) et peuvent être activés au moyen d'un identifiant de sélection défini pour un achat de boisson.

10. Machine à café automatique selon l'une des revendications 1 à 9,
**caractérisée en ce qu'**
au moins un paramètre de boisson contient une grandeur pour la quantité totale, la teneur en caféine, la force, l'amertume, la sensation de goût aigre et/ou la plénitude de la boisson prête.

11. Machine à café automatique selon l'une des revendications 1 à 10,
**caractérisée en ce que**
la mémoire (MEM) comprend une liste qui désigne les temps pour l'activation des voies d'écoulement (2b, 2c), la sélection des temps pour l'activation des différentes conduites d'écoulement (2b, 2c) réalisée par l'unité d'attribution (19) étant effectuée à partir de la liste à l'aide d'un tableau d'attribution, d'un modèle mathématique ou d'une fonction mathématique, afin que le dispositif de commande (18, uC) puisse commander, au moyen de la sélection mise à disposition, la soupape de commutation (3a) de manière correspondante pour la préparation de boisson consécutive.
